(19) Europäisches Patentamt / European Patent Office / Office européen des brevets

(11) **EP 4 570 376 A1**

(12) **EUROPEAN PATENT APPLICATION**

(43) Date of publication:
18.06.2025 Bulletin 2025/25

(21) Application number: 24209204.7

(22) Date of filing: 28.10.2024

(51) International Patent Classification (IPC):
**B01L 3/00** *(2006.01)* **G01N 35/10** *(2006.01)*
**A61J 1/20** *(2006.01)*

(52) Cooperative Patent Classification (CPC):
**B01L 3/523; B01L 3/00; B01L 3/563;**
**G01N 35/1002;** B01L 2200/025; B01L 2200/0684;
B01L 2300/044; B01L 2300/048; B01L 2300/0672;
B01L 2400/0457; B01L 2400/0683

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 13.12.2023 JP 2023210647

(71) Applicant: **Jeol Ltd.**
**Akishima-shi, Tokyo 196-8558 (JP)**

(72) Inventor: **SHINOZAKI, Takuya**
**Tokyo, 196-8558 (JP)**

(74) Representative: **Boult Wade Tennant LLP**
**Salisbury Square House**
**8 Salisbury Square**
**London EC4Y 8AP (GB)**

(54) **LIQUID FEEDER**

(57) There is provided a liquid feeder (10) using a liquid container (11) having a reduced number of ports than conventional. The liquid feeder (10) can reduce the operational burden on the user. The liquid feeder (10) comprises the liquid container (11) and a container holding portion (12) that holds the liquid container (11). The liquid container (10) has a container body (15), a sealing member (16), and a cap (17). The container holding portion (12) has a cap receiving portion (60) and a needle (70). The sealing member (16) is made of a resilient material and has slitted portions (26). The cap (17) is made of a hard material and has a cover portion (29) that is disposed opposite to the sealing member (16). The cover portion (29) is so configured as to be split along groove portions (35) when the needle (70) pushes against the cover portion (29). The slitted portions (26) of the sealing member (16) are spread apart when the needle (70) pushes against the sealing member (16).

**EP 4 570 376 A1**

# EP 4 570 376 A1

**Description**

<u>BACKGROUND OF THE INVENTION</u>

1. Field of the Invention

The present invention relates to a liquid feeder for use in an automated analyzer.

2. Description of the Related Art

An automated analyzer is an instrument for quickly and accurately analyzing multiple components contained in an analyte, and is used in various fields including biochemical examinations and blood transfusion examinations. Furthermore, an automated analyzer is equipped with a measuring section for measuring analytes. In the measuring section, liquids such as diluents and cleaning liquids are used. These liquids are stored in reservoirs equipped in the automated analyzer. The liquids stored in the reservoirs are fed into given sections using pumps and tubes, for example.
If a liquid stored in a reservoir is fed into a given section using a pump or the like, the amount of the remaining liquid decreases accordingly. Therefore, the reservoir needs to be refilled with the liquid before the reservoir is emptied. Consequently, the automated analyzer has a liquid feeder for feeding the liquid into the reservoir.
With respect to such liquid feeders, a technique set forth, for example, in patent document 1 is known. This patent document 1 discloses a configuration having ports formed in an upper portion and a lower portion, respectively, of a liquid container. A threaded cap is attached to the upper port. A septum and the cap are attached to the lower port. Patent document 1 also discloses a configuration using a mounting bracket in which a liquid container is set. A needle is mounted at the bottom of the bracket and operative to pierce the septum.

<u>Citation List</u>

Patent Documents

Patent document 1: Japanese Patent No. 4,945,572
In the technique set forth in patent document 1, however, the two ports are formed in the liquid container. Therefore, if the liquid container is fabricated by blow molding, for example, the fabrication is made more difficult. Also, the cost of fabrication of the liquid container increases. Furthermore, with the technique set forth in patent document 1, when the needle pierces the septum, the user needs to loosen the threaded cap plugging up the upper port in order to cause air to flow into the liquid container so that the liquid inside the liquid container flows down through the needle. Therefore, in view of the user's operability, there is a problem to be remedied.

<u>SUMMARY OF THE INVENTION</u>

The present invention has been made to solve the above-described problem. It is an object of the present invention to provide a liquid feeder which can reduce the number of ports formed in a liquid container and which can alleviate the burden imposed on the user's operability.
A liquid feeder associated with the present invention comprises: a liquid container having (i) a container body provided with a port and operative to receive a liquid, (ii) a sealing member for sealing the port of the container body, and (iii) a cap for securing the sealing member to the port; and a container holding portion for holding the liquid container while the cap is placed downward. The container holding portion has: a cap receiving portion that forms a space capable of accepting the cap; and a needle disposed in the space formed by the cap receiving portion. The sealing member is made of a resilient material and has slitted portions. The cap is made of a hard material and has a cover portion disposed opposite to the sealing member. The cover portion has groove portions formed by partially reducing the cover portion in thickness. The cover portion of the cap is so configured as to be split along the groove portions when the needle pushes against the cover portion. The sealing member is so configured that the slitted portions are spread apart when the needle pushes against the sealing member.
According to the present invention, the number of ports formed in the liquid container can be reduced. Also, the burden on the user's manipulation can be alleviated.

<u>BRIEF DESCRIPTION OF THE DRAWINGS</u>

FIG. 1 is a cross-sectional view of a liquid feeder associated with a first embodiment of the present invention, showing the configuration of the feeder.

FIG. 2 is an enlarged view of a portion of the liquid feeder of FIG. 1.

FIG. 3 is a perspective view of a sealing member equipped in the liquid feeder of FIG. 1, showing the configuration of the sealing member.

FIG. 4 is a perspective view similar to FIG. 3, but in which slitted portions of the sealing member have been spread out.

FIG. 5 is a perspective view of a cap equipped in the liquid feeder of FIG. 1 as viewed from the outside of the container body.

FIG. 6 is a perspective view similar to FIG. 5, but as viewed from the inside of the container body.

FIG. 7 is a plan view of the cap of the liquid feeder of FIG. 1.

FIG. 8 is a cross-sectional view of the cap of FIG. 7, as taken along line A-A.

FIG. 9 is an enlarged view of portion B of FIG. 8.

FIG. 10 is a cross-sectional view of the liquid feeder of FIG. 1, as taken along line C-C.

FIG. 11 is a perspective view of a manifold shown in FIG. 1.

FIG. 12 is a plan view of the needle of FIGS. 1 and 2.

FIG. 13 is a perspective view of the needle of FIG. 12.

FIGS. 14 and 15 are a cross-sectional view and a perspective view, respectively, showing the manner in which the cover portion of the cap has been split along the groove portions.

FIG. 16 is a cross-sectional view illustrating the manner in which the slitted portions of the sealing member have been pushed and spread out by the needle.

FIG. 17 is a cross-sectional view showing the manner in which the liquid container of the liquid feeder of FIG. 1 has been set in the container holding portion.

FIG. 18 is an enlarged view of a portion of the liquid feeder shown in FIG. 17.

FIG. 19 is a perspective view of a needle equipped in a liquid feeder associated with a second embodiment of the present invention.

FIG. 20 is a partial cross-section illustrating the arrangement of various portions of the liquid feeder of FIG. 19 when the liquid container is set in the container holding portion.

FIG. 21 is a perspective view of a cap equipped in a liquid feeder associated with a third embodiment of the invention, as viewed from the outside of the container body.

FIG. 22 is a perspective view of the cap similar to FIG. 21, but as viewed from the inside of the container body.

FIG. 23 is a cross-sectional view of the cap of the liquid feeder of FIGS. 21 and 22.

FIG. 24 is a partial cross-section showing the manner in which there is a positional deviation between the central axis of the cap and the central axis of the needle when a user sets a liquid container in the container holding portion.

## DETAILED DESCRIPTION OF THE INVENTION

The preferred embodiments of the present invention are hereinafter described in detail with reference to the drawings. In the present specification and drawings, elements having the same function or configuration are indicated by the same reference numerals and repetitive description thereof is omitted. Furthermore, it is to be understood that the following description and drawings are merely exemplary and that they may be simplified or omitted for the sake of illustration. Each component of the invention may be either singular or plural unless specifically stated otherwise. In addition, the position, size, shape, and range of each component in the drawings may not precisely represent the actual position, size, shape, and range for ease of understanding of the present invention. Therefore, the present invention is not always restricted to the positions, sizes, shapes, ranges, and so on disclosed in the drawings.

< First Embodiment >

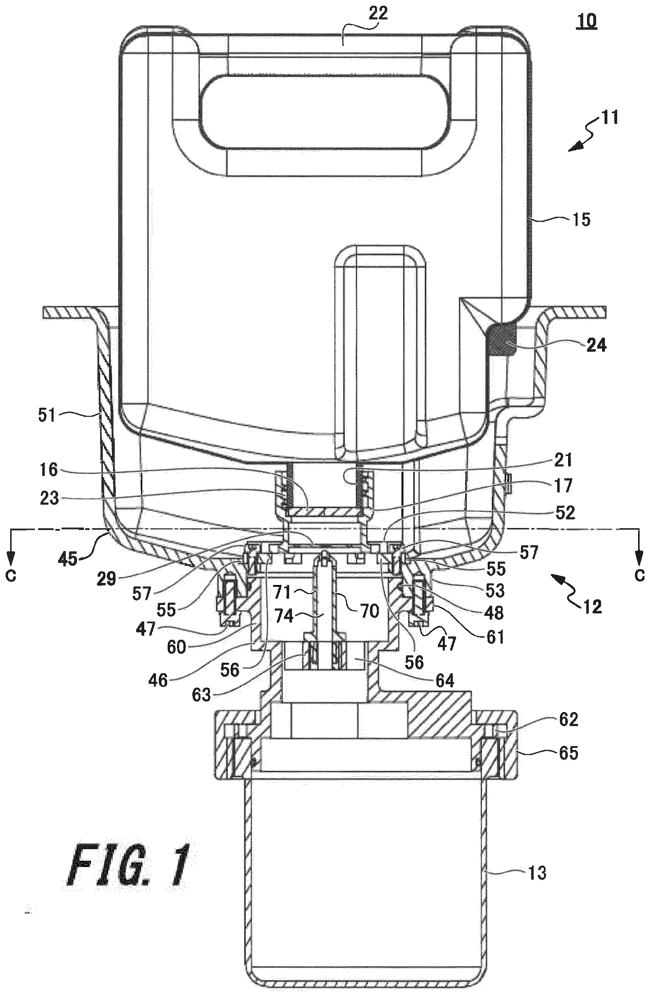

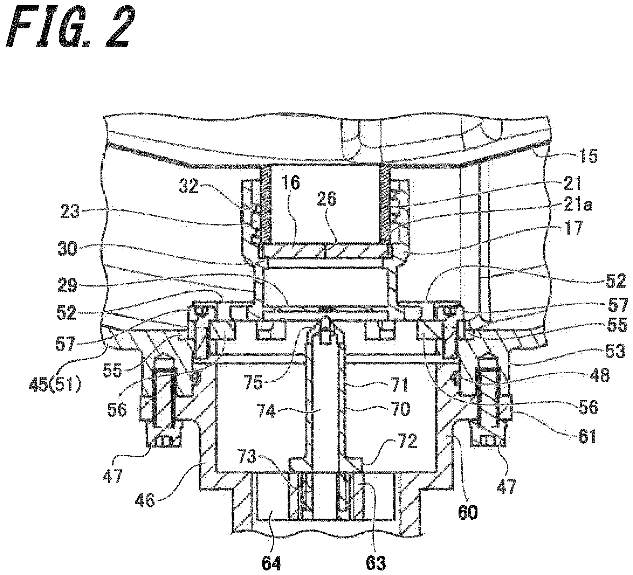

FIG. 1 is a cross-sectional view showing the configuration of a liquid feeder, 10, associated with a first embodiment of the present invention. FIG. 2 is an enlarged view of a portion of the liquid feeder 10 of FIG. 1. In FIG. 1, the up/down direction is parallel to a vertical direction, and the left/right direction is parallel to a horizontal direction.

As shown in FIGS. 1 and 2, the liquid feeder 10 includes a liquid container 11, a container holding portion 12 for holding the liquid container 11, and a liquid reservoir 13 for storing the liquid flowing downward from the liquid container 11. The liquid feeder 10 is equipped, for example, in an automated analyzer that uses liquids such as various diluents and cleaning liquids. The liquid feeder 10 may also be an instrument other than an automated analyzer, and may be equipped in various instruments handling different kinds of liquid. In the present embodiment, it is assumed that the liquid feeder 10 is equipped in an automated analyzer. As mentioned previously, an automated analyzer is an instrument for quickly and accurately analyzing multiple components contained in an analyte, and is used in various fields including biochemical examinations and blood transfusion examinations. Generally, a single automated analyzer is equipped with a plurality of liquid feeders 10. Also, of the components of each liquid feeder 10, the liquid container 11 is replaceable, and the container holding portion 12 and reservoir 13 are always in position within the liquid feeder 10.

Liquid Container

The liquid container 11 is detachably mounted to the container holding portion 12. When the liquid container 11 is set in the container holding portion 12, the container 11 is inserted from above to below into the container holding portion 12. When the liquid container 11 is taken out of the container holding portion 12, the container 11 is pulled up from the container holding portion 12. The work of mounting or detaching the liquid container 11 to or from the container holding portion 12 is done by a user. FIGS. 1 and 2 show a state in which the liquid container 11 is being inserted into the container holding portion 12 to set the container 11 in the holding portion 12.

The liquid container 11 has a container body 15, a sealing member 16, and a cap 17. The container body 15 is made of a bottle that accommodates a liquid. The bottle acting as the container body 15 is treated, for example, as a disposable or replaceable bottle. In this case, the sealing member 16 and the cap 17 are treated as disposable members in the same manner as the above-described replaceable bottle. Note that the container body 15 may not be disposable but rather made reusable by cleaning or otherwise processing it. The bottle serving as the container body 15 is fabricated by blow molding, for example. The container body 15 is a hollow body having a capacity to receive a given amount of liquid.

The container body 15 has a port 21 and a grip portion 22 (see FIG. 1) which are integral with each other. When the liquid container 11 is set in the container holding portion 12, the body port 21 is disposed downward. The port 21 is shaped cylindrically. An external thread 23 (see FIG. 2) is formed on the outer surface of the body port 21. The grip portion 22 is disposed on the opposite side of the body port 21 as viewed in the up/down direction in FIG. 1. When the liquid container 11 is set in the container holding portion 12, the user manually holds the grip portion 22 to carry the container 11. A tab 24 (see FIG. 1) is formed integrally with the liquid container 11 to make it possible to detect whether the liquid container 11 has been set in the container holding portion 12, i.e., a sensor (not shown) detects the presence or absence of the liquid container 11.

In the present example, the tab 24 is mounted to the liquid container 11 but the present invention is not restricted to this example. For example, it may be detected as to whether the liquid container 11 has been set in the container holding portion 12 via a separate member. When the liquid container 11 is set in a case portion 51 of the container holding portion 12 which will be described later, a rotatable member comes into contact with the liquid container 11 and rotates. A sensor detects the rotation of this rotatable member, whereby detecting whether the liquid container 11 has been set in the container holding portion 12. The sensor may be an optical sensor consisting of a light emitter emitting light and a light receiver detecting the light from the light emitter. When the liquid container 11 is set and the rotatable member rotates, this rotating member blocks the light from the light emitter. Consequently, it is possible to detect that the liquid container 11 has been set in the container holding portion 12. The rotatable member is preferably an opaque member that does not transmit light.

Sealing Member

The sealing member 16 serves to seal off the port 21 of the liquid container 11 and is made of a resilient material such as a synthetic resin. That is, the sealing member 16 is a rubberlike resilient body. The sealing member 16 is placed in intimate contact with an end surface 21a (see FIG. 2) of the body port 21.

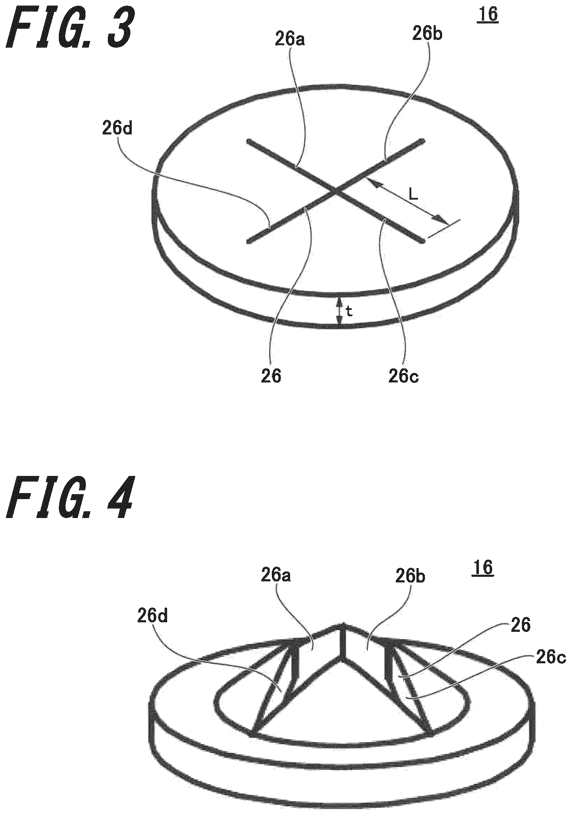

FIG. 3 is a perspective view showing the configuration of the sealing member 16 of the liquid feeder associated with the first embodiment of the present invention. As shown, the sealing member 16 is shaped in the form of a circular disk having a given thickness. The sealing member 16 is provided with slitted portions 26 which extend thicknesswise through the sealing member 16. The surfaces forming the slitted portions 26a-26d are kept in intimate contact with each other by the resilience of the sealing member 16.

The slitted portions 26a-26d in the sealing member 16 extend radially outwardly from a central portion of the sealing member 16. In the present embodiment, four slitted portions 26a-26d are formed as an example in the sealing member 16 and arranged rotationally symmetrically and in a crisscross manner.

The sealing member 16 is so configured that a needle 70 (see FIGS. 1 and 2) pushes against the sealing member 16 to thereby spread the slitted portions 26a-26d apart as shown in FIG. 4. The sealing member 16 is also configured so that, when the needle 70 is pulled out of the sealing member 16, the resilience of the sealing member 16 closes the slitted portions 26a-26d. The structure of the needle 70 is described in further detail later.

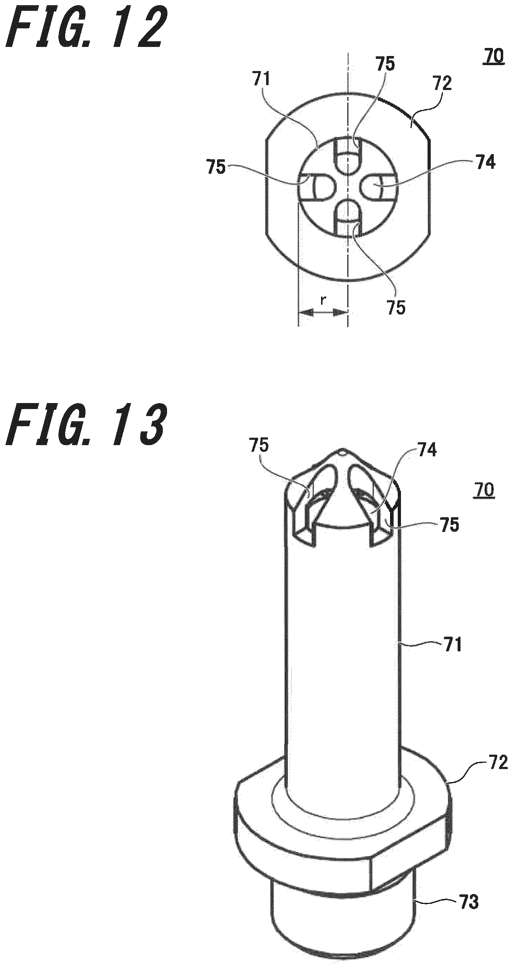

Assuming that the sealing member 16 has a thickness of t in mm, the thickness t of the sealing member 16 is preferably between 3 mm and 7 mm as shown in FIG. 3. Assuming that the needle 70 has a radius of r in mm, the length L in mm of each of the slitted portions 26a-26d preferably satisfies Eq. (1) below. The radius r of the needle 70 is the radius of the stem 71 of the needle 70 shown in FIGS. 12 and 13.

$$r + t \leq L \leq 5t \qquad\qquad (1)$$

If the length L of each of the slitted portions 26a-26d satisfies Eq. (1) above, the following advantages arise. When the four slitted portions 26a-26d are spread apart by the needle 70, given gaps can be formed between successive ones of the slitted portions 26a-26d. The gaps are formed around the needle 70 because each of the slitted portions 26a-26d is spread apart into a V-shaped form as viewed along the central axis of the needle 70. The given gaps between the successive ones of the slitted portions 26a-26d can be used as air and fluid passages. When the needle 70 is pulled out of the sealing member 16, the resilience of the sealing member 16 restores the slitted portions 26a-26d into their original state, i.e., before spread apart by the needle 70, and closes the given gaps. Therefore, when the needle 70 is pulled out of the sealing member 16, leakage of liquid from the slitted portions 26a-26d can be suppressed.

In the present embodiment, the four slitted portions 26a-26d are formed in the sealing member 16 and arranged in a crisscross fashion. The present invention is not restricted to this example. For example, three slitted portions may be formed in the sealing member 16 so as to be circumferentially equally spaced from each other about a central portion of the sealing member 16. In addition, the sealing member 16 may be provided with five or more slitted portions.

Furthermore, in the present embodiment, the four slitted portions 26a-26d extend thicknesswise through the sealing member 16. The present invention is not restricted to this example. For example, the slitted portions 26a-26d may depthwise extend not fully through the sealing member 16 such that thin-walled portions are left in the deepest portions of the slitted portions 26a-26d. In this case, the performance of the sealing member 16 in terms of sealing the port 21 during transportation or storage of the liquid container 11 can be enhanced. When the needle 70 (see FIGS. 1 and 2) pushes against the sealing member 16, the thin-walled portions are pushed and broken by the needle 70. Therefore, the slitted portions 26a-26d can be pushed and spread out by the needle 70.

Cap

The cap 17 is a member mounted to the port 21 of the container body 15 in order to attach the sealing member 16 to the port 21. The cap 17 is made of a hard material such as a hard resin (e.g., polypropylene).

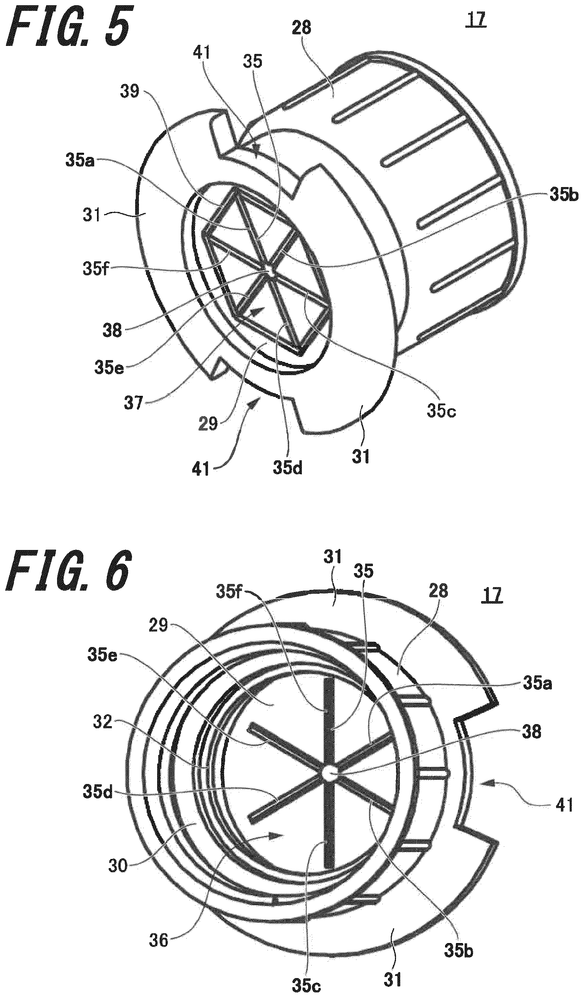

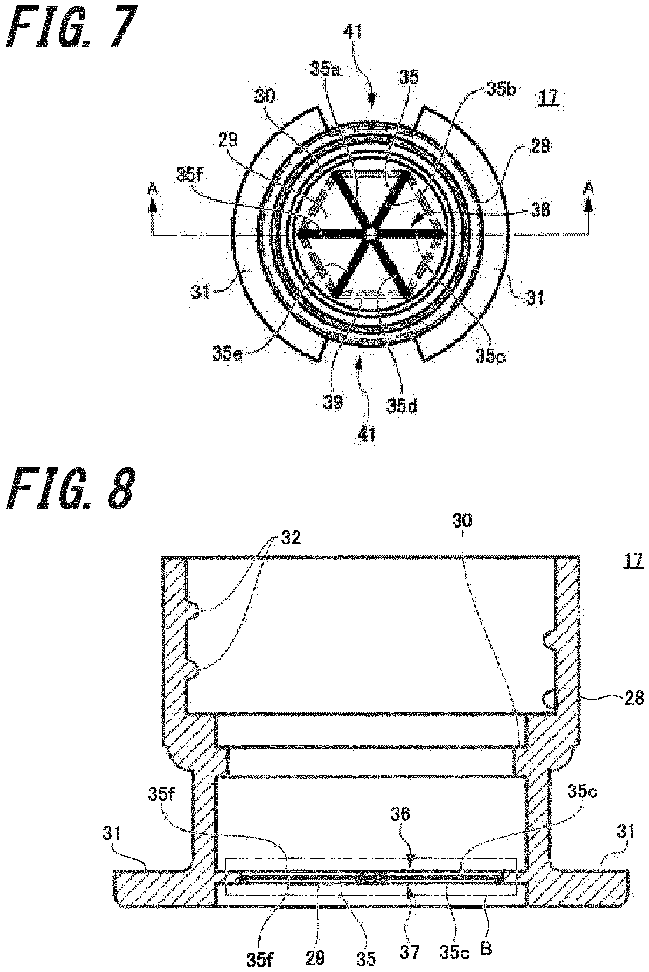

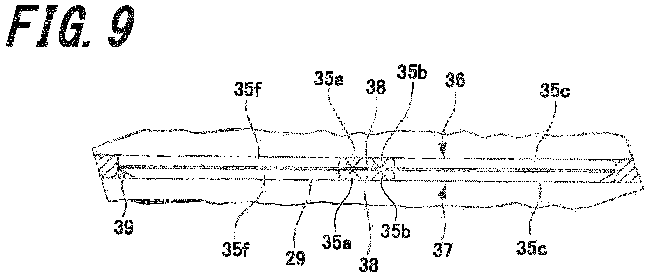

FIG. 5 is a perspective view of the cap 17 equipped in the liquid feeder associated with the first embodiment of the present invention, as viewed from the outside of the container body 15 (i.e., from the underside of FIG. 1). FIG. 6 is a perspective view of the cap 17 of FIG. 1, as viewed from the inside of the container body 15 (i.e., from the top side of FIG. 1). FIG. 7 is a plan view of the cap 17 of the liquid feeder of FIG. 1. FIG. 8 is a cross-sectional view of the cap 17 of FIG. 7, taken on line A-A. FIG. 9 is an enlarged view of portion B of FIG. 8.

As shown in FIGS. 5-9, the cap 17 has a cylindrical sidewall 28, a cover portion 29 closing off one opening of the sidewall 28, a toroidal portion 30 radially inwardly protruding from the inner side surface of the sidewall 28, and a flange portion 31 protruding radially outwardly of the outer surface of the sidewall 28. The cap 17 is unitarily molded from a resin.

On the inner side of the sidewall 28, an internal thread 32 is formed together with the toroidal portion 30. When the cap 17 is mounted to the port 21 of the container body 15, the internal thread 32 engages the external thread 23 on the port 21. By bringing the internal thread 32 into engagement with the external thread 23 on the port 21 as shown in FIG. 2 and tightening the cap 17, the cap 17 is clampingly secured against the port 21 of the liquid container 11. As described previously, the toroidal portion 30 pushes the sealing member 16 against the end surface 21a of the port 21 by tightening the cap 17. When the cap 17 is mounted to the port 21 of the container body 15, the port 21 is placed upward. In this case, the sealing member 16 is disposed between the end surface 21a of the port 21 and the toroidal portion 30 of the cap 17. Under this condition, the cap 17 is tightened, whereby the sealing member 16 is secured to the end surface 21a of the port 21 while in intimate contact with it.

The cover portion 29 is disposed opposite to the sealing member 16 as shown in FIG. 2. When the cap 17 is viewed from the front side, the cover portion 29 appears to be circular in shape. The cover portion 29 is shaped in a disklike form. When the cap 17 has been attached to the port 21, the cover portion 29 is placed a given distance (described later) from the sealing member 16.

Groove portions 35 are formed in the cover portion 29 by partially reducing the thicknesswise dimension of the cover portion 29. Therefore, the parts of the cover portion 29 which have the groove portions 35 provide lower mechanical strength than the other parts. However, the cover portion 29, including the parts where the groove portions 35 are formed, has no through-holes extending thicknesswise. Therefore, when the port 21 of the container body 15 is sealed by the sealing member 16 and tightened by the cap 17, it follows that the port 21 is sealed doubly by the sealing member 16 and the cap 17. This can enhance the sealability of the liquid container 11 during transportation or storage.

The cover portion 29 has the plural groove portions 35 (35a-35f) extending radially outwardly from a central portion of the cover portion 29. The groove portions 35 (35a-35f) are so formed that when the needle 70 pushes against the cover portion 29, the cover portion 29 is split along the groove portions 35a-35f. In the present embodiment, 6 groove portions 35a-35f are formed in the cover portion 29 as an example. The 6 groove portions 35a-35f are formed rotationally symmetrically and arranged radially. Preferably, each of the groove portions 35a-35f has a V-shaped cross-sectional shape. They may also have other cross-sectional shape, such as a U-shaped cross-sectional shape.

The cover portion 29 has a first surface 36 (see FIGS. 6 and 8) and a second surface 37 (see FIGS. 5 and 8) which are disposed on opposite sides of each other, the first surface 36 being opposite to the sealing member 16. When the cap 17 has been mounted to the port 21 of the container body 15, the first surface 36 of the cover portion 29 acts as the inner surface of the cover portion 29 that faces into the container body 15 while the second surface 37 of the cover portion 29 serves as the outer surface of the cover portion 29 that faces outside of the container body 15.

On the other hand, the six groove portions 35a-35f are formed in both first surface 36 and second surface 37. The groove portions 35a-35f in the first surface 36 have the same depth as the groove portions 35a-35f in the second surface 37. Note that the depth of the groove portions 35a-37f in the first surface 36 may be different from the depth of the groove portions 35a-35f in the second surface 37. The 6 groove portions 35a-35f are formed at their respective corresponding positions in the first surface 36 and the second surface 37. That is, if the cap 17 is seen through from the front side, they would be in registry with each other.

Thin-walled portions 38 (see FIGS. 5 and 6) are formed in the central portion of the cover portion 29 to suppress positional deviations of the needle 70. The thin-walled portions 38 are formed in both first surface 36 and second surface 37 in the same way as the above-described 6 groove portions 35a-35f. The thin-walled portions 38 are shaped substantially circularly. The depth of the thin-walled portions 38 in the first surface 36 is the same as that of the groove portions 35a-35f in the first surface 36. The depth of the thin-walled portions 38 in the second surface 37 is the same as that of the groove portions 35a-35f in the second surface 37.

Second groove portions 39 are formed in the second surface 37 of the cover portion 29 as shown in FIG. 5. In contrast, the second groove portions 39 are not formed in the first surface 36 of the cover portion 29 as shown in FIG. 6. When the needle 70 pushes against the cover portion 29, the second groove portions 39 facilitate splitting of the cover portion 29 along the groove portions 35a-35f and prevent fragments of the split cover portion 29 from separating from the cap 17.

The second groove portions 39 in the second surface 37 have the same depth as that of the groove portions 35a-35f in the second surface 37. The second surface 37 is so formed as to interconnect the radially outer ends of the groove portions 35a-35f formed in the second surface 37. In the present embodiment, the six groove portions 35a-35f are formed in the second surface 37. The overall arrangement of the second groove portions 39 is hexagonal in shape as viewed from the front of the cap 17. The shape of the overall arrangement of the second groove portions 39 is not restricted to a hexagon but rather may be a polygon corresponding to the number of groove portions formed in the second surface 37. If four groove portions, for example, are formed in the second surface 37 in a crisscross manner, the overall arrangement of the second groove portions 39 is shaped tetragonally in a manner not illustrated. Furthermore, the second groove portions 39 may be circular in shape regardless of the number of groove portions formed in the second surface 37.

Plural cutout portions 41 are formed in the flange portion 31. In the present embodiment, two cutout portions 41 are formed on the circumference of the flange portion 31 as an example. The two cutout portions 41 are spaced 180° from each other circumferentially of the cap 17. The cutout portions 41 have a given circumferential width. The positions of the cutout portions 41, i.e., slit positions, as taken circumferentially of the cap 17 are determined according to the type of liquid received in the container body 15. The number of the cutout portions 41 may be either one or three or more. Where the cap 17 is threadedly tightened and secured to the port 21 of the container body 15, the positions of the cutout portions 41 as taken circumferentially of the cap 17 can be brought to preliminarily assumed positions by either causing a portion of the cap 17 to strike the end surface 21a (see FIG. 2) of the port 21 or controlling the tightening torque on the cap 17.

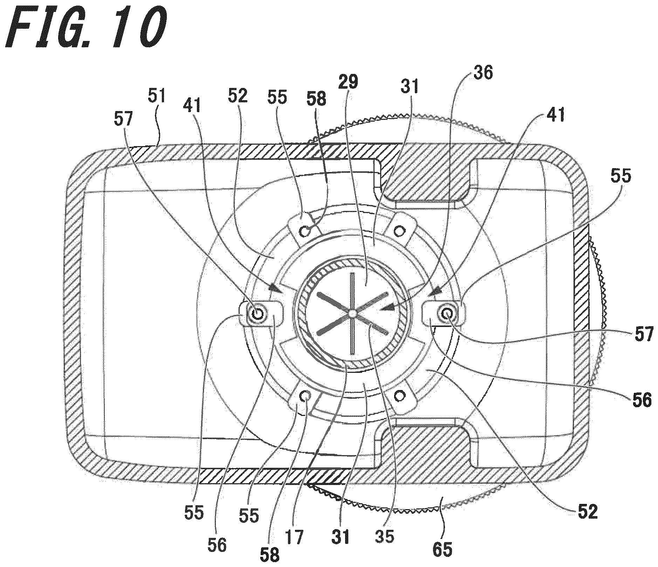

The cutout portions 41 in the flange portion 31 are formed to prevent incorrect insertion of any liquid container 11 that is different from the liquid container 11 to be inserted and set in the container holding portion 12. In particular, there is presented a case where there are one liquid container 11 for receiving a first diluting fluid and another liquid container 11 for receiving a second diluting fluid different in type (such as components) from the first diluting fluid. In this case, it is probable that the liquid container 11 receiving the first diluting fluid should be inserted in the container holding portion 12 but the user might incorrectly insert the liquid container 11 receiving the second diluting fluid. Such incorrect insertion of the liquid container 11 is prevented by mechanical interference between the flange portion 31 and keys 56 (described later) (see FIG. 10).

Container Holding Portion

The container holding portion 12 holds the liquid container 11 while the cap 17 is placed downward. As shown in FIGS. 1 and 2, the container holding portion 12 has a housing 45 and a manifold 46. The manifold 46 is tightened and secured to the bottom or a lower portion of the housing 45 with a plurality of bolts 47. A ring-shaped sealing member 48 is mounted inside the tightening positions of the bolts 47 and suppresses leakage of gas and liquid at the contact interface between the housing 45 and the manifold 46.

Housing

The housing 45 has sufficient rigidity to hold the container body 15 in which a given amount of liquid is received. The housing 45 has the above-described case portion 51 forming a space capable of receiving the container body 15, a container receiving portion 52 formed at the bottom of the case portion 51, and a connector portion 53 connected to the manifold 46. All of these portions 51-53 are formed integrally.

The liquid container 11 which is inserted and set in the container holding portion 12 is received and supported from below by the container receiving portion 52. In particular, the bottom surface of the container body 15 is received and supported from below outside of the body port 21 by the container receiving portion 52. As a result, the whole mass of the liquid container 11 including the mass of the liquid received in the container body 15 acts on the container receiving portion 52.

As shown in FIG. 10, the container receiving portion 52 is formed in a toroidal shape. FIG. 10 is a cross-sectional view of the liquid feeder 10 of FIG. 1, taken on line C-C. A plurality of key mounting portions 55 are formed on the same circumferential surface as the container receiving portion 52. One key 56 is detachably attached to each key mounting portion 55. The keys 56 prevent incorrect insertion of the liquid container 11. The keys 56 are mounted at positions where mechanical interference with the flange portion 31 is prevented according to the type of liquid received in the container body 15. The key mounting portions 55, the keys 56, and the container receiving portion 52 together constitute the housing 45 of the container holding portion 12.

The key mounting portions 55 are formed by partly recessing the above-described circumferential surface. In the present embodiment, six key mounting portions 55 are formed as an example. The 6 key mounting portions 55 are circumferentially equally spaced from each other at intervals of 60°. Also in the present embodiment, one key 56 is attached to two ones of the 6 key mounting portions 55. The number of keys 56 is equal to the number of the cutout portions 41 formed in the flange portion 31 of the cap 17. Each key 56 is mounted to the key mounting portions 55 with bolts 57. Therefore, each key mounting portion 55 has a threaded hole 58 engaging with an external thread on each bolt 57. The dimension of the recess of each key mounting portion 55 is so set that, when the key 56 is attached to the key mounting portion 55 with the bolt 57, the head of the bolt 57 is lower than the top surface of the container receiving portion 52. The key 56 protrudes radially inwardly of the container receiving portion 52. The dimension of the protrusion of the key 56 is so set that, if any liquid container 11 is incorrectly inserted, the key 56 will contact the flange portion 31 of the cap 17, thus mechanically interfering with it.

The connector portion 53 is formed radially outwardly of the container receiving portion 52 as shown in FIG. 2. The connector portion 53 is formed in a toroidal shape and has an internal thread which mates with the external thread on the bolt 47. The housing 45 and the manifold 46 are fastened together by tightening the bolts 47 mating with the threaded holes in the connector portion 53.

Manifold

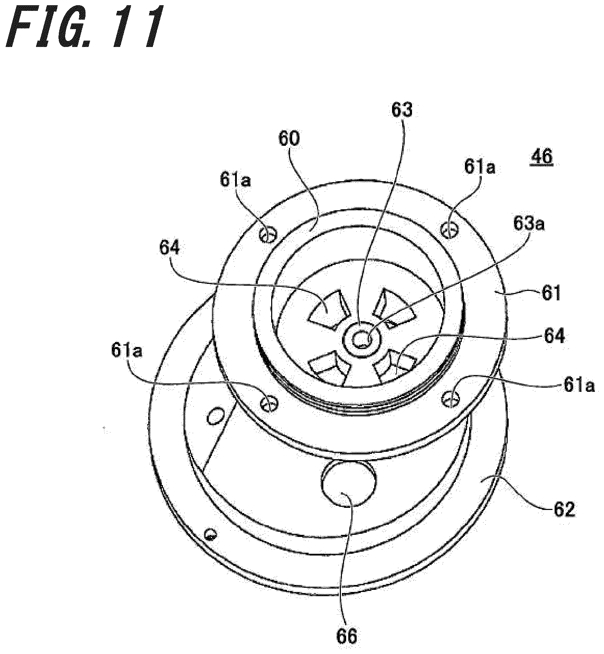

FIG. 11 shows the manifold 46 as viewed obliquely from above. As shown, the manifold 46 is an integral, hollow member having a cap receiving portion 60, a first mounting portion 61, a second mounting portion 62, and a needle mounting portion 63. The cap receiving portion 60 is shaped cylindrically and forms a space capable of receiving the cap 17. The needle 70 (see FIG. 2) is disposed in the inside space of the cap receiving portion 60. The needle 70 cooperates with the housing 45 and the manifold 46 to constitute the container holding portion 12. The cap receiving portion 60 has an upper end portion fitted inside the connector portion 53.

The first mounting portion 61 is used to mount the manifold 46 to the housing 45. The first mounting portion 61 is provided with through-holes 61a into which the external threads of the bolts 47 are inserted. In the present embodiment, four through-holes 61a are formed in the first mounting portion 61 as an example. In this case, the manifold 46 is tightened and secured to the connector portion 53 of the housing 45 with the four bolts 47.

The second mounting portion 62 is used to mount the manifold 46 to the reservoir 13. The reservoir 13 has an upper end portion to which the second mounting portion 62 is fastened with a fixture 65 that uses a tightening force, for example, produced by mating between threads.

The needle mounting portion 63 is used to mount the needle 70 to the manifold 46 having an internal space that is partitioned into an upper space higher than the needle mounting portion 63 and a lower space lower than the needle mounting portion 63. A plurality of communication holes 64 are formed around the needle mounting portion 63 to place the upper and lower spaces inside the manifold 46 into communication with each other. In the present embodiment, four communication holes 64 are formed around the needle mounting portion 63 as an example.

A securing hole 63a is formed in the needle mounting portion 63 to secure the needle 70. Where the needle 70 is tightened and secured to the needle mounting portion 63, for example, by mating between threads, the securing hole 63 is an internally threaded hole. In this case, an external thread mating with the securing hole 63 is formed on the needle 70. The means for securing the needle 70 to the needle mounting portion 63 is not restricted to tightening using threads. Other means such adhesive bonding or press fitting is also available.

The manifold 46 is provided with a sensor mounting hole 66 in which a residual amount sensor (described later) (not shown) is mounted.

FIG. 12 is a plan view of the needle equipped in the liquid feeder of FIG. 1 as viewed from the front side. FIG. 13 is a perspective view of this needle. As shown in these FIGS. 12 and 13, the needle 70 has a needle stem 71, a needle jaw 72, and a needle base 73 which are formed integrally. Preferably, the needle 70 is made of a chemical-resistant metal. The front end of the stem 71 of the needle 70 is placed upward. The needle 70 has a conical front end.

The needle 70 has a hollow portion 74 which extends in the direction of the central axis of the needle 70 from the needle stem 71 to the needle base 73 through the needle jaw 72 except for the conical front end of the needle 70. That is, the needle 70 is hollow in structure.

One or more cutout holes 75 are formed at the front end of the needle 70 and in communication with the hollow portion 74. In the present embodiment, plural cutout holes 75 are formed at the front end of the needle 70 as a preferred example. Also in the present embodiment, four cutout holes 75 are formed at the front end of the needle 70 as one example. The four cutout holes 75 are arranged at regular circumferential intervals of 90°. As shown in FIG. 12, each cutout hole 75 is shaped in the form of a semi-slot and cuts out a portion of the conical surface at the front end of the needle 70.

The needle jaw 72 is so formed as to protrude radially outwardly of the needle 70 with respect to both the needle stem 71 and the needle base 73. When the needle 70 is mounted to the needle mounting portion 63 of the above-described manifold 46, the needle jaw 72 is made to strike the upper surface of the needle mounting portion 63.

The needle base 73 is formed on the opposite side of the needle jaw 72 from the needle stem 71. The needle base 73 is formed in a rear end portion of the needle 70. When the needle 70 is mounted into the needle mounting portion 63 of the above-described manifold 46, the needle base 73 is inserted into the securing hole 63a of the needle mounting portion 63. An external thread is formed on the needle base 73 to permit the needle 70 to be tightened and screwed, for example, to the needle mounting portion 63 of the manifold 46.

The needle 70 of the construction described above is mounted to the needle mounting portion 63 of the manifold 46 as shown in FIG. 2. The needle stem 71 of the needle 70 is so disposed as to be raised vertically from the needle mounting portion 63 while the front end of the needle 70 is made to face upward. The needle stem 71 of the needle 70 is positioned in a central portion of the space formed by the cap receiving portion 60 of the manifold 46.

With the liquid feeder 10 shown in FIG. 1 and associated with the first embodiment of the present invention, the liquid container 11 is set in the container holding portion 12 according to a procedure described below.

First, a user inserts an unused liquid container 11 into the container holding portion 12. In particular, the user manually holds the grip portion 22 of the liquid container 11 and inserts the container 11 into the case portion 51 of the container holding portion 12 from above the housing 45. At this time, the port 21 of the liquid container 11 and the cap 17 attached to the port 21 are placed downward. The port 21 of the liquid container 11 is sealed by the sealing member 16 and the cap 17. The cover portion 29 of the cap 17 is located lower than the sealing member 16.

Where the liquid container 11 is inserted into the container holding portion 12 in a manner as described above, the two cutout portions 41 formed in the flange portion 31 of the cap 17 and the two keys 56 attached to the key mounting portion 55 of the housing 45 may not agree in position. In particular, the type of liquid contained in the liquid container 11 to be set in the container holding portion 12 and the type of liquid received in the liquid container 11 about to be set in the container holding portion 12 by the user may be different due to a user's mistake. In this case, the flange portion 31 of the cap 17 makes contact with the keys 56 of the housing 45 to thereby cause mechanical interference before the front end of the needle 70 touches the cover portion 29 of the cap 17. Therefore, an incorrect liquid container 11 can be prevented from being set in the container holding portion 12 because of a user's mistake, i.e., incorrect insertion of liquid container 11 can be prevented.

On the other hand, if the two cutout portions 41 formed in the flange portion 31 of the cap 17 and the two keys 56 attached to the key mounting portion 55 of the housing 45 agree in position as shown in FIG. 10, the flange portion 31 of the cap 17 does not contact the keys 56 of the housing 45 and thus no mechanical interference occurs. In this case, the needle 70 makes contact with the cover portion 29 of the cap 17. Specifically, the front end of the needle 70 makes contact with a central portion of the cover portion 29. In the present embodiment, the thin-walled portion 38 is formed in a central portion of the cover portion 29. A thick-walled portion other than the groove portions 35 is present around the thin-walled portion 38. Therefore, when the front end of the needle 70 is brought into contact with the cover portion 29, the thick-walled portion around the thin-walled portion 38 suppresses positional deviations of the needle 70.

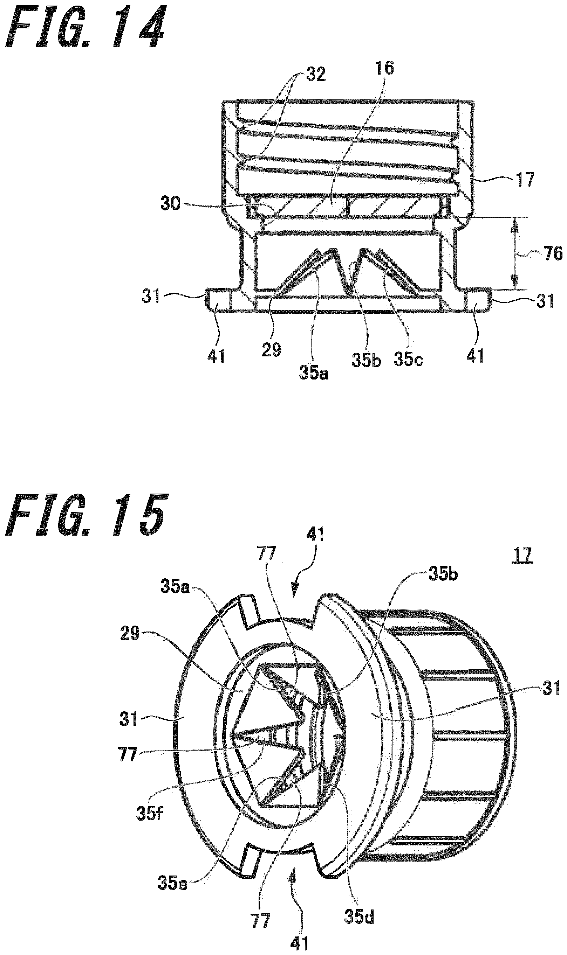

If the user pushes the liquid container 11 in downwards while the front end of the needle 70 is in contact with the central portion of the cover portion 29 as described above, the central portion of the cover portion 29 is thrust upward by the front end of the needle 70 in response to the push-in force. As a result, a hole is formed in the thin-walled portion 38 that is formed around the center of the cover portion 29, and this hole is forcibly widened by the front end of the needle 70. Consequently, the cover portion 29 of the cap 17 is split along the groove portions 35a-35f as shown in FIGS. 14 and 15. In other words, the cover portion 29 is broken into six parts along the groove portions 35a-35f. In the cover portion 29 of the cap 17, those portions which are formed with the groove portions 35a-35f are folded such that they can be wound upwardly.

This leaves gaps 77 (see FIG. 15) around the needle stem 71 of the needle 70. One gap 77 is formed for each one of the groove portions 35a-35f. Because the cover portion 29 is split along the groove portions 35 and the cover portion 29 is folded partially so as to be wound upwardly, the gaps 77 are formed.

On the cover portion 29 of the cap 17, the second surface 37 has the second groove portions 39 but the first surface 36 does not have the second groove portions 39. Therefore, if the user pushes the liquid container 11 in downwards, the hexagonal portion of the cover portion 29 which is surrounded by the second groove portions 39 is easily split along the groove portions 35. However, the hexagonal portion is held to the cap 17 as one part of the cover portion 29 and does not separate off as a fragment. Accordingly, when the cover portion 29 of the cap 17 is split along the groove portions 35 by a push of the needle 70, production of fragments can be suppressed.

As shown in FIG. 14, a space corresponding to a given distance 76 is secured inside the cap 17 to prevent fragments of the cover portion 29 created by splitting of it along the groove portions 35 from interfering or contacting with the sealing member 16. The distance 76 is not less than the length of the groove portions 35a-35f extending from the central portion of the cover portion 29. Consequently, the fragments of the cover portions 29 resulting from the splitting along the groove portions 35 do not hinder the open/close action of the sealing member 16 in response to insertion and removal of the needle 70. The open/close action of the sealing member 16 involves an operation by the needle 70 to force open the slitted portions 26a-26b formed in the sealing member 16 and an operation by the needle 70 to close the slitted portions 26a-26b as the needle is pulled out.

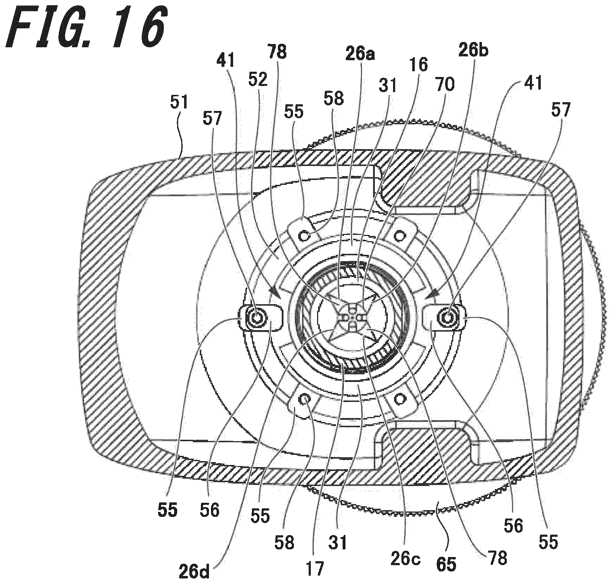

If the user pushes the liquid container 11 in downwards as described previously, the front end of the needle 70 breaks the cover portion 29 of the cap 17 along the groove portions 35, then comes into contact with the central portion of the sealing member 16, and pushes against the sealing member 16. As a result, the slitted portions 26a-26d formed in the sealing member 16 are pushed by the needle 70 and spread apart as shown in FIGS. 4 and 16. At this time, the slitted portions 26a-26d spread apart form respective gaps 78 (see FIG. 16) around the needle stem 71 of the needle 70. Each one of the slitted portions 26a-26d forms one gap 78.

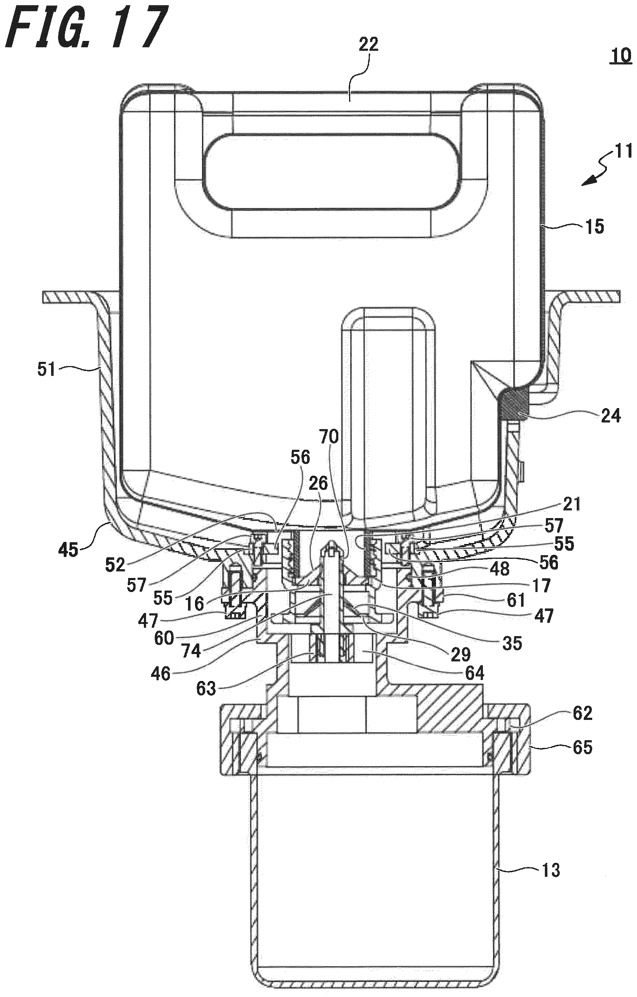

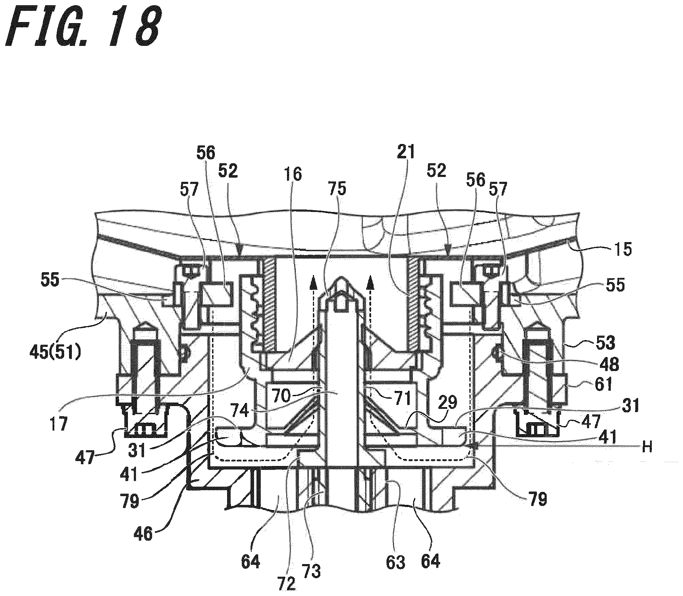

FIG. 17 is a cross-sectional view showing the manner in which the liquid container 11 is set in the container holding portion 12 within the liquid feeder 10 of FIG. 1. FIG. 18 is an enlarged view of a part of the liquid feeder 10 of FIG. 17. As shown in FIGS. 17 and 18, when the liquid container 11 has been set in the container holding portion 12, the front end (top end) of the needle 70 juts up through both the cover portion 29 of the cap 17 and the sealing member 16. In this way, when the liquid container 11 is set in the container holding portion 12, the front end of the needle 70 enters into the port 21 of the container body 15. Therefore, the front end of the needle 70 touches the liquid (not shown) received in the liquid container 11. The cover portion 29 of the cap 17 is split along the groove portions 35, whereby the gaps 77 (see FIG. 15) are formed around the stem 71 of the needle 70. The slitted portions 26 in the sealing member 16 are spread apart, so that the gaps 78 (see FIG. 16) are formed.

Therefore, air passages 79 (see FIG. 18) through the gaps 77 and 78 are formed inside the cap receiving portion 60 of the manifold 46. Air flows into the container body 15 through the passages 79. The liquid received in the container body 15 flows out of the container body 15 by its own weight. In particular, the liquid inside the container body 15 mainly passes through the two paths and flows out toward the reservoir 13 from the container body 15.

The first exit path goes from the cutout holes 75 at the front end of the needle 70 through the hollow portion 74 of the needle 70. The second exit path goes through the gaps 77, 78 and through the communication holes 64. The liquid flowing out of the container body 15 through the first and second paths enters the reservoir 13 through the lower internal space of the manifold 46. As a result, the liquid flowing out of the container body 15 is accumulated in the reservoir 13.

Then, if the height of the surface of the liquid accumulated in the reservoir 13 reaches a given height H shown in FIG. 18, the liquid touches the lower surface of the flange portion 31. As a result, the fluid passages 79 are partially blocked off by the liquid and so air no longer enters the container body 15. Accordingly, the outflow of the liquid from the container body 15 into the reservoir 13 comes to a stop.

Then, the liquid in the reservoir 13 is sent to the outside with a tube and a pump or the like. If the height of the surface of the liquid goes below the given height H, air enters into the container body 15 through the passages 79. Therefore, the liquid flows out from the container body 15 toward the reservoir 13. Such outflow of the liquid repeats whenever the liquid in the reservoir 13 is sent to the outside. Therefore, as long as the liquid remains in the container body 15, the height of the surface of the liquid is maintained at the given height H while the interior of the reservoir 13 is filled with the liquid.

On the other hand, when the liquid is not left in the container body 15, i.e., when the container body 15 is empty, if the height of the surface of the liquid is below the given height H, the liquid no longer flows out into the reservoir 13 from the container body 15. Therefore, if the liquid in the reservoir 13 is sent to the outside by a tube and a pump or the like, the amount of remaining liquid in the reservoir 13 decreases. Accordingly, the user needs to replace the emptied container body 15 with unused container body 15. Furthermore, it is necessary to prompt the user to replace the container body 15.

Accordingly, the above-described residual amount sensor (not shown) for detecting the remaining amount of the liquid in the reservoir 13 is mounted in it. The residual amount sensor is mounted in the sensor mounting hole 66 which is formed in the manifold 46 as described previously. If the amount of the liquid remaining in the reservoir 13 falls below a predetermined level, the residual amount sensor outputs a detection signal to that effect to the controller (not shown) of the automated analyzer. In response, the controller controls the display section such that a message prompting the user to exchange the container body 15 is displayed on the display screen of the display section of the analyzer. If the analyzer is equipped with plural liquid feeders 10, the controller displays information for identifying the liquid feeder 10 for which the amount of liquid remaining in the reservoir 13 is below the predetermined level, together with the message, on the display screen of the display section. Consequently, the user checks the information on the display screen of the display section, recognizes for which of the liquid feeders 10 is the amount of liquid remaining in the reservoir 13 below the predetermined level, and performs a work to replace the container body 15 based on the results of the recognition.

A procedure performed by the user to implement the work to relace the liquid container 11 is described below. First, the user manually holds the grip portion 22 of the liquid container 11 set in the liquid feeder 10 for which the amount of liquid remaining in the reservoir 13 is below the predetermined level, and pulls up the liquid container 11 from the container holding portion 12. At this time, the needle 70 is pulled out of both the sealing member 16 and the cover portion 29 of the cap 17. As a result, the sealing member 16 is restored to its original shape (i.e., shape assumed before pushed by the needle 70) by the resilience of the sealing member 16. The slitted portions 26a-26d formed in the sealing member 16 return to their closed state as shown in FIG. 3. Consequently, if a slight amount of liquid remains in the container body 15, if the user pulls up liquid container 11 different from the liquid container 11 to be replaced, or other human error takes place, for example, the port 21 of the container body 15 is sealed off by the sealing member 16, thus suppressing leakage of the liquid.

Then, the user sets an unused liquid container 11 in the container holding portion 12 according to a procedure similar to the foregoing procedure. As a consequence, the replacement of the liquid container 11 is completed.

As described thus far, the liquid feeder 10 associated with the first embodiment of the present invention has: the sealing member 16 having the slitted portions 26a-26d; and the container body 15 having the cap 17 whose cover portion 29 is provided with the groove portions 35. The cover portion 29 of the cap 17 is so configured as to be split along the groove portions 35a-35f as the needle 70 pushes against the cover portion 29. The sealing member 16 is so configured that the slitted portions 26a-26d are spread apart as the needle 70 pushes against the sealing member 16. Consequently, inflow of air into the liquid container 11 and outflow of liquid from the liquid container 11 can be accomplished simply by providing the liquid container 11 with only one port 21. For this reason, the number of ports formed in the liquid container can be reduced as compared with the conventional structure in which ports are formed in upper and lower portions, respectively, of a liquid container. Accordingly, where the container body 15 is fabricated by blow molding, for example, the fabrication of the container body 15 is facilitated and the fabrication cost can be lowered. Furthermore, the user does not need to loosen the threaded cap plugging up the top portion of the liquid container. This can alleviate the operational burden on the user.

The sealing member 16 is provided with the plurality of slitted portions 26a-26d which extend radially outwardly from a central portion of the sealing member 16 and which are arranged rotationally symmetrically. On the other hand, the cover portion 29 of the cap 17 has the plurality of groove portions 35a-35f which extend radially outwardly from a central portion of the cover portion 29 and which are arranged rotationally symmetrically. Consequently, when the sealing member 16 is pushed by the needle 70, the slitted portions 26a-26d can be spread apart uniformly circumferentially of the sealing member 16. Furthermore, when the cover portion 29 of the cap 17 is pushed by the needle 70, the cover portion 29 can be split uniformly along the groove portions 35a-35f circumferentially of the cover portion 29.

The cap 17 has the cylindrical sidewall 28 and the toroidal portion 30 protruding radially inwardly from the inner surface of the sidewall 28. The sealing member 16 is pushed against the end surface 21a of the port 21 by the toroidal portion 30. Consequently, simultaneously with the tightening of the cap 17, the sealing member 16 is brought into intimate contact with the end surface 21a of the port 21, whereby the opening of the port 21 can be sealed off by the sealing member 16.

The flange portion 31 of the cap 17 is provided with the cutout portions 41 which define cutout positions corresponding to their respective types of liquid received in the container body 15. On the other hand, the container holding portion 12 has keys 56 and key mounting portions 55 to which the keys 56 are detachably mounted. The keys 56 are mounted at positions where mechanical interference with the flange portion 31 is avoided according to the types of liquid received in the container body 15. The key mounting portions 55 are so designed that the positions at which the keys 56 are mounted can be varied according to the types of liquid received in the container body 15. This can prevent incorrect insertion of the liquid container 11. Where plural liquid feeders 10 are mounted in the automated analyzer, the positions at which the keys 56 are mounted can be varied freely according to the types of liquid received in the container body 15 of each liquid feeder 10. Therefore, where liquids received in the container bodies 15 of the liquid feeders 10 are different in type, the parts other than the cap 17 can be made common for all the types of liquid. In the present embodiment, the keys 56 are detachably mounted to the key mounting portions 55. However, the present invention is not restricted to this example. For example, the keys 56 may be molded integrally with the container receiving portion 52.

The front end of the needle 70 is shaped conically. Consequently, when the liquid container 11 is set in the container holding portion 12, the pushing force of the needle 70 can be concentrated on both the central portion of the cover portion 29 of the cap 17 and the central portion of the sealing member 16. Therefore, when the liquid container 11 is set in the container holding portion 12, the user can enter the front end side of the needle 70 into the port 21 through the cover portion 29 of the cap 17 and the sealing member 16 simply by pushing the liquid container 11 in downwards with a relatively small force.

The needle 70 has a hollow portion 74. The cutout holes 75 in communication with the hollow portion 74 are formed around the front end of the needle 70. Consequently, where the front end side of the needle 70 is entered into the port 21 of the container body 15, the hollow portion 74 of the needle 70 can be used as one passage for the liquid flowing out from the container body 15 toward the reservoir 13.

< Second Embodiment >

A liquid feeder associated with a second embodiment of the present invention is next described. This liquid feeder is similar to the above-described feeder associated with the first embodiment except for the needle structure.

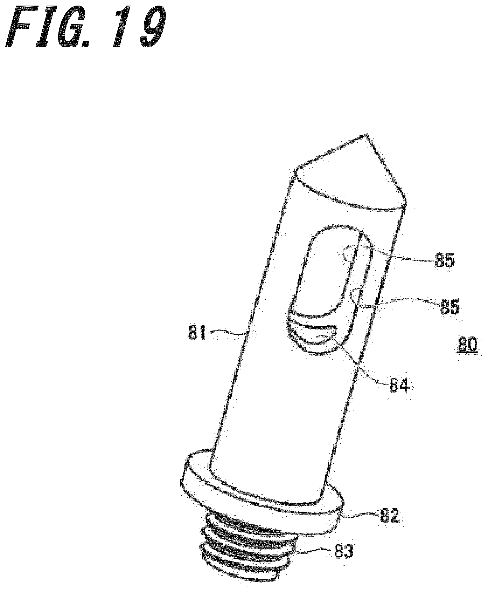

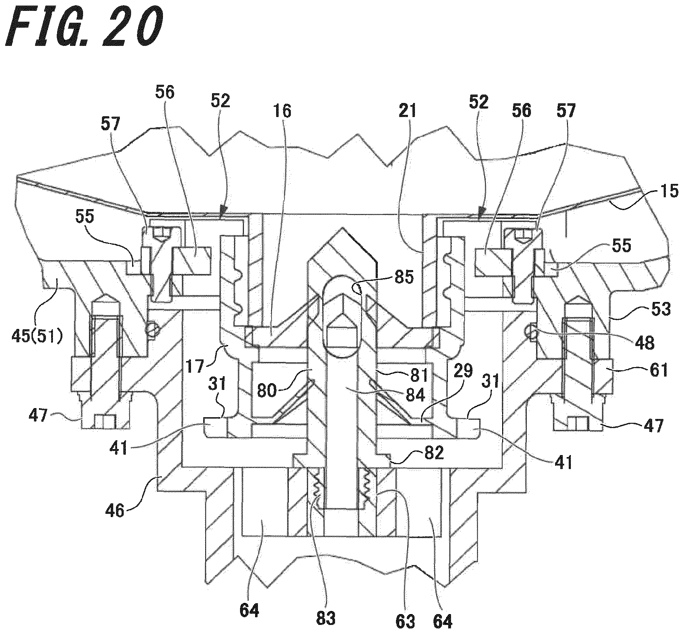

FIG. 19 is a perspective view of the needle equipped in the liquid feeder associated with the second embodiment. FIG. 20 is a fragmentary cross-sectional view illustrating the arrangement of various portions of the liquid container of the liquid feeder of FIG. 19 when the container is set in the container holding portion.

As shown in FIG. 19, the needle, 80, has a needle stem 81, a needle jaw 82, and a needle base 83 which are formed integrally. The stem 81 of the needle 80 has a conical front end. The needle 80 has a hollow portion 84 which extends from the needle stem 81 to the needle base 83 along the central axis of the needle 80 through the needle jaw 82 except for the conical front end of the needle 80. That is, the needle 80 is hollow in structure. The structure of the needle 80 described so far is essentially identical to that of the needle 70 according to the first embodiment.

Slots 85 in communication with the hollow portion 84 are formed in the needle stem 81 excluding the conical front end of the needle 80. The slots 85 are formed lengthwise in the peripheral wall of the needle stem 81. The slots 85 are two in number and formed in the single needle 80 and arranged at positions opposite to each other with respect to the central axis of the needle 80.

The needle jaw 82 radially protrudes outwardly of both the needle stem 81 and the needle base 83. When the needle 80 is mounted to the needle mounting portion 63 of the manifold 46, the needle jaw 82 is made to strike on the upper surface of the needle mounting portion 63.

The needle base 83 is formed on the opposite side of the needle jaw 82 from the needle stem 81. The needle base 83 is formed on a rear end portion of the needle 80. When the needle 80 is mounted to the needle mounting portion 63 of the manifold 46, the needle base 83 is inserted into the securing hole 63a of the needle mounting portion 63. In the present embodiment, the needle base 83 is externally threaded, for example, for a case where the needle 80 is tightened and screwed into the needle mounting portion 63 of the manifold 46.

The needle 80 of the above-described structure is mounted to the needle mounting portion 63 of the manifold 46 as shown in FIG. 20. The needle stem 81 of the needle 80 is raised vertically from the needle mounting portion 63 while the front end of the needle 80 faces upward. The stem 81 of the needle 80 is placed around the center of a space formed by the cap receiving portion 60 of the manifold 46.

In the liquid feeder associated with the second embodiment of the present invention, when the liquid container 11 is set in the container holding portion 12, the cover portion 29 of the cap 17 is split along the groove portions 35a-35f as shown in FIG. 20 as the needle 80 pushes against the cover portion 29. The sealing member 16 is so configured that the slitted portions 26a-26d are spread apart as the needle 80 pushes against the sealing member 16, as can be seen from FIGS. 4, 14, 15, 17, 18, and 20. Therefore, the number of ports formed in the liquid container can be reduced in the same manner as in the first embodiment. Also, the operational burden on the user can be alleviated.

The liquid feeder associated with the second embodiment of the present invention differs from the liquid feeder 10 associated with the first embodiment only as to the structure of the needle 80 and, therefore, yields the same advantageous effects as those of the first embodiment as well as the above-described advantageous effects.

The front end of the needle 80 is shaped conically. This permits the user to bring the front end side of the needle 80 into the port 21 through both the cover portion 29 of the cap 17 and the sealing member 16 simply by pushing the liquid container 11 in downwards with a relatively small force, in the same manner as in the first embodiment described above.

The needle 80 has the hollow portion 84, and the needle stem 81 excluding the conical front end of the needle 80 is provided with the slots 85 in communication with the hollow portion 84. Consequently, when the front end side of the needle 80 is entered into the port 21 of the container body 15, the hollow portion 84 of the needle 80 can be employed as one passage for the liquid flowing out from the container body 15 toward the reservoir 13.

In the second embodiment, however, when the front end side of the needle 80 is entered into the port 21 of the container body 15 as shown in FIG. 20, there is a possibility that a part of the sealing member 16 spread apart by the needle 80 might clog up a part of the slot 85. This may partially narrow the liquid passage employing the hollow portion 84 of the needle 80. Furthermore, when the needle 80 is pulled out of the cover portion 29 of the cap 17 in order to exchange the liquid container 11, the cover portion 29 split along the groove portions 35a-35f may be partially caught on the upper fringes of the slots 85. Therefore, where the liquid container 11 is pulled up from the container holding portion 12, parts of the cover portion 29 are caught on the upper fringes of the slots 85, thus deteriorating the workability.

In contrast, in the first embodiment, the front end of the needle 70 is shaped conically, and the conical surface of the needle 70 is provided with the cutout holes 75. Therefore, when the front end side of the needle 70 is entered into the port 21 of the container body 15, it is unlikely that parts of the sealing member 16 spread apart by the needle 70 will plug up the cutout holes 75. Also, when the needle 70 is pulled out of the cover portion 29 of the cap 17 in order to exchange the liquid container 11, it is unlikely that parts of the cover portion 29 split along the groove portions 35a-35f will become caught in the cutout holes 75. Accordingly, the structure of the needle 70 used in the first embodiment is preferably adopted as the needle structure.

< Third Embodiment >

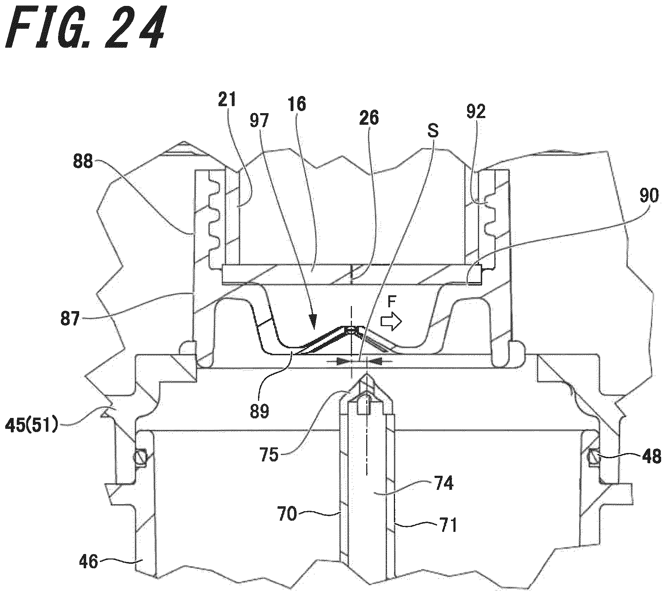

A liquid feeder associated with a third embodiment of the present invention is next described. This liquid feeder is similar to the liquid feeder associated with the first embodiment except for the structure of the cap.

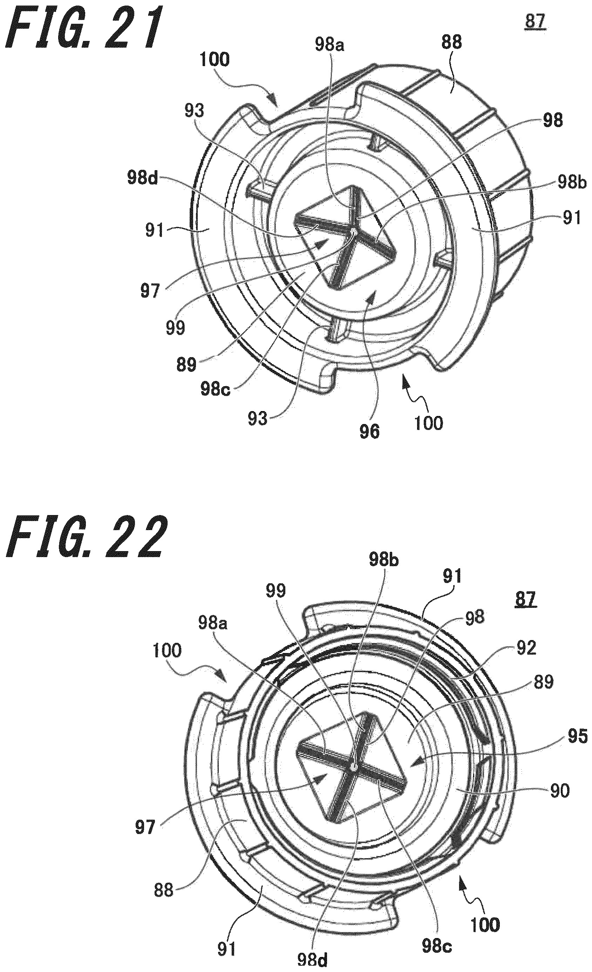

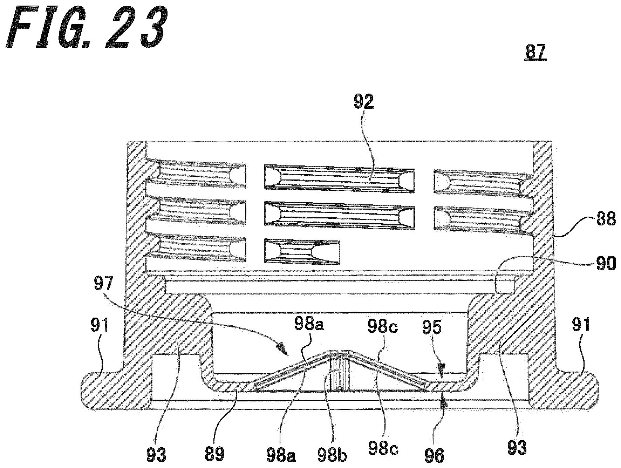

FIG. 21 is a perspective view of the cap 87 equipped in the liquid feeder associated with the third embodiment of the present invention, as viewed from the outside of the container body. FIG. 22 is a perspective view of the cap 87 of FIG. 21 as viewed from the inside of the container body. FIG. 23 is a cross-sectional view of the cap 87 of FIGS. 21 and 22.
The cap 87 shown in FIGS. 21-23 is a member for securing the sealing member 16 to the port 21 of the container body 15. The cap 87 is made of a hard material such as a hard resin (e.g., polypropylene).
The cap 87 has a cylindrical sidewall 88, a cover portion 89 closing off one opening of the sidewall 88, a toroidal portion 90 protruding radially inwardly from the inner surface of the sidewall 88, and a flange portion 91 protruding radially outwardly from the outer surface of the sidewall 88. The cap 87 is integrally molded from a resin.
An internal thread 92 is formed on the inner side of the sidewall 88 together with the toroidal portion 90. When the cap 87 is mounted to the port 21 of the container body 15, the internal thread 92 meshes with the external thread 23 (see FIG. 2) on the port 21. The cap 87 is tightened and secured to the port 21 of the liquid container 11 by bringing the internal thread 92 into engagement with the external thread 23 on the port 21 and tightening the cap 87. As described previously, the sealing member 16 is pushed against the end surface 21a of the port 21 by the help of the toroidal portion 90 by tightening the cap 87 as described previously. When the cap 87 is mounted to the port 21 of the container body 15, the port 21 is placed upward. In this case, the sealing member 16 is interposed between the end surface 21a of the port 21 and the toroidal portion 90 of the cap 87. Under this condition, the cap 87 is tightened. As a result, the sealing member 16 is intimately secured to the end surface 21a of the port 21.
The cover portion 89 is disposed opposite to the sealing member 16 as shown in FIG. 24. The cover portion 89 appears to be circular in shape when the cap 87 is viewed from its front side. A plurality of (four in the illustrated example) ribs 93 are formed around the cover portion 89 as shown in FIG. 21 and interconnect the sidewall 88 and the cover portion 89 radially of the cap 87.
The cover portion 89 has a first surface 95 disposed opposite to the sealing member 16, a second surface 96 arranged on the opposite side of the first surface 95, and a tapering portion 97 in the form of a four-sided pyramid. When the cap 87 is mounted to the port 21 of the container body 15, the first surface 95 of the cover portion 89 acts as the inner surface of the cover portion 89 which faces into the interior of the container body 15, while the second surface 96 of the cover portion 89 serves as the outer surface of the cover portion 89 which faces toward the outside of the container body 15. The tapering portion 97 is so formed that its side facing the first surface 95 is convex, whereas its side facing the second surface 96 is concave.
The tapering portion 97 of the cover portion 89 is provided with plural groove portions 98a-98d which are formed by partially reducing the thicknesswise dimension of the tapering portion 97 of the cover portion 89. The groove portions 98a-98d are so formed that when the needle 70 pushes against the cover portion 89, the cover portion 89 is split along the groove portions 98a-98d. FIGS. 21-23 show the structure of the cap 87 before the cover portion 89 is split along the groove portions 98a-98d.
In the present embodiment, four groove portions 98a-98d are formed in the tapering portion 97 of the cover portion 89 as one example. The four groove portions 98a-98d are arranged rotationally symmetrically and extend radially outwardly from a central portion of the cover portion 89.
The four groove portions 98a-98d are formed in both first surface 95 and second surface 96. More specifically, the four groove portions 98a-98d extend along the ridge line of the tapering portion 97 the side of which facing the first surface 95 is convex. The groove portions 98a-98d also extend along the ridge line of the tapering portion 97 the side of which facing the second surface 96 is concave. In other words, the four groove portions 98a-98d are formed at their respective corresponding positions in the first surface 95 and second surface 96.
The depthwise dimension of the groove portions 98a-98d on the side of the first surface 95 is identical to that of the groove portions 98a-98d on the side of the second surface 96 but may be different from that.
Thin-walled portions 99 are formed in a central portion of the tapering portion 97 to suppress positional deviations of the needle 70. The thin-walled portions 99 are formed in both the first surface 95 and the second surface 96 in the same way as for the four groove portions 98a-98d described above. The thin-walled portions 99 are shaped nearly circularly. The thicknesswise dimension of the thin-walled portion 99 on the side of the first surface 95 is identical to that of the groove portions 98a-98d on the side of the first surface 95. The thicknesswise dimension of the thin-walled portion 99 on the side of the second surface 96 is identical to that of the groove portions 98a-98d on the side of the second surface 96.

As shown in FIGS. 21 and 22, the flange portion 91 is provided with a plurality of cutout portions 100. In the present embodiment, two cutout portions 100 are formed circumferentially of the flange portion 91 as one example. The two cutout portions 100 are angularly spaced 180° from each other circumferentially of the cap 87. The cutout portions 100 have a given circumferential width. Cutout positions respectively defined by the cutout portions 100 circumferentially of the cap 87 are determined according to types of liquid received in the container body 15. The number of the cutout portions 100 may be either one or three or more. The cutout portions 100 in the flange portion 91 are formed to prevent incorrect insertion of the liquid container 11. The principle of preventing incorrect insertion of the liquid container 11 is the same as the principle adopted in the above-described first embodiment and so a description thereof is omitted herein.

In the liquid feeder associated with the third embodiment of the present invention, when the user sets the liquid container 11 in the container holding portion 12, a positional deviation S may occur between the central axis of the cap 87 and the central axis of the needle 70 as shown in FIG. 24. The positional deviation S can be suppressed by enhancing the positioning accuracy of the container body 15 with respect to the case portion 51 when the container body 15 of the liquid container 11 is inserted into the case portion 51 of the container holding portion 12. However, enhancing the positioning accuracy of the container body 15 with respect to the case portion 51 makes it more difficult to insert the container body 15 into the case portion 51. Furthermore, enhancing the positional accuracy increases the costs of manufacturing the liquid container 11, cap 87, and case portion 51. Therefore, in order to permit the container body 15 to be smoothly inserted into the case portion 51 and to suppress increases in the costs of fabricating the liquid container 11, cap 87, and case portion 51, it is necessary to lessen the above-described positional accuracy.

In view of this requirement, in the liquid feeder associated with the third embodiment of the present invention, a tapering portion 97 is formed in the cover portion 89 of the cap 87. Groove portions 98a-98d are formed in the tapering portion 97. Therefore, if the positional deviation S occurs between the central axis of the cap 87 and the central axis of the needle 70, the tilted surface of the tapering portion 97 comes into contact with the front end of the needle 70. At this time, the tilted surface of the tapering portion 97 acts as a guide surface which guides the front end of the needle 70 toward a central portion (thin-walled portions 99) of the tapering portion 97. If the front end of the needle 70 comes into contact with the tilted surface or recess of the tapering portion 97 while the container body 15 is being inserted into the case portion 51 by the user, a lateral or horizontal force F is applied to the cap 87, thus reducing the positional deviation S. The cap 87 is mounted to the port 21 of the container body 15. Therefore, if the lateral force F is applied to the cap 87, the container body 15 is positionally corrected together with the cap 87. Thus, during the process in which the user sets the liquid container 11 into the container holding portion 12, the positional deviation S is eliminated. Consequently, the front end of the needle 70 can be brought into contact with a central portion of the cover portion 89.

If the user pushes the liquid container 11 in downwards while the front end of the needle 70 is in contact with the central portion of the cover portion 89 as described above, the cover portion 89 of the cap 87 is pushed by the needle 80, whereby the cover portion 89 is broken along the groove portions 98a-98d. In particular, if the central portion of the cover portion 89 is pushed by the front end of the needle 80, holes are created in the thin-walled portions 99 in the central portion of the cover portion 89 and spread apart by the front end of the needle 80. As a result, the tapering portion 97 of the cover portion 89 is broken into four parts along the groove portions 98a-98d. Accordingly, if the positioning accuracy of the container body 15 with respect to the case portion 51 is loosened, it is assured that the front end of the needle 80 is brought into contact with the central portion of the cover portion 89 and that the tapering portion 97 of the cover portion 89 can be broken along the groove portions 98a-98d. The tilted surface of the tapering portion 97 functions as a guide surface for guiding the front end of the needle 80 to the central portion of the cover portion 89. This can maintain constant the user's push-in force needed to break the tapering portion 97 of the cover portion 89 along the groove portions 98a-98d. Consequently, it is possible to offer a user-friendly liquid feeder.

In the third embodiment of the present invention, the tapering portion 97 of the cover portion 89 is shaped in the form of a four-sided pyramid. The present invention is not restricted to this example. The tapering portion of the cover portion 89 may also be a polygonal pyramid other than a four-sided pyramid. A conical shape is also available. The number of groove portions 98 formed in the tapering portion of the cover portion 89 may be varied according to the shape of the tapering portion. In addition, the liquid feeder associated with the third embodiment of the present invention may be equipped with the needle 80 instead of the needle 70.

< Modifications >

It is to be understood that the technical scope of the present invention is not restricted to the foregoing embodiments but rather embraces forms including various modifications and improvements as long as certain advantageous effects can be derived by the constituents of the invention and their combinations.

For example, in the above embodiments, each needle has a hollow structure as a preferred example. The present invention is not restricted to this example. The needle may have no hollow portion.

Furthermore, in the above embodiments, the front end of the needle is shaped conically as a preferred example. The present invention is not restricted to this example. For example, the front end of the needle may be in a pyramidal form. In addition, if the cover portion 29 can be split along the groove portions 35 when the cover portion 29 of the cap 17 is pushed by the front end of the needle, the front end of the needle may be shaped in any form.

Additionally, in the first embodiment described above, the groove portions 35 are formed in both the first surface 36 and the second surface 37 of the cover portion 29 of the cap 17 as a preferred example. The present invention is not restricted to this example. The groove portions 35 may be formed only in one surface of the cover portion 29 of the cap 17. The same principle applies to the above-described third embodiment, i.e., the groove portions 98 formed in the tapering portion 97 of the cover portion 89.

**Claims**

1.  A liquid feeder comprising:

    a liquid container having (i) a container body provided with a port and operative to receive a liquid, (ii) a sealing member for sealing the port of the container body, and (iii) a cap for securing the sealing member to the port; and
    a container holding portion operative to hold the liquid container while the cap is placed downward and having both a cap receiving portion forming a space capable of accepting the cap and a needle disposed in the space formed by the cap receiving portion;
    wherein the sealing member is made of a resilient material and has at least one slitted portion;
    wherein the cap is made of a hard material and has a cover portion disposed opposite to the sealing member, the cover portion having groove portions formed by partially reducing the cover portion in thickness;
    wherein the cover portion of the cap is so configured as to be split along the groove portions when the needle pushes against the cover portion; and
    wherein the sealing member is so configured that the slitted portion is spread apart when the needle pushes against the sealing member.

2.  A liquid feeder as set forth in claim 1, wherein said at least one slitted portion of said sealing member is plural in number, extends radially outwardly from a central portion of the sealing member, and is arranged rotationally symmetrically, and wherein said cover portion has a plurality of groove portions which extend radially outwardly from a central portion of the cover portion and which are arranged rotationally symmetrically.

3.  A liquid feeder as set forth in claim 2, wherein thin-walled portions are formed in a central portion of said cover portion to suppress positional deviations of said needle.

4.  A liquid feeder as set forth in claim 1, wherein said cap has a cylindrical sidewall and a toroidal portion radially inwardly protruding from the inner surface of the sidewall, and wherein said sealing member is pressed against an end surface of said port by the toroidal portion.

5.  A liquid feeder as set forth in claim 4,

    wherein said cap has a flange portion which protrudes radially outwardly from the outer surface of said sidewall and which is provided with slitted portions defining slit positions respectively for different types of liquid received in said container body, and
    wherein said container holding portion has keys mounted at positions where mechanical interference with the flange portion is avoided according to the types of liquid received in the container body.

6.  A liquid feeder as set forth in claim 5, wherein said container holding portion has a plurality of key mounting portions to which said keys are detachably mounted, and wherein positions at which the keys are mounted can be varied according to the types of liquid.

7.  A liquid feeder as set forth in claim 1, wherein said groove portions extend from the central portion of said cover portion and have a length, and wherein a distance equal to or greater than the length of the groove portions is secured between said sealing member and the cover portion.

8.  A liquid feeder as set forth in claim 2,

wherein said cover portion has a first surface disposed opposite to said sealing member and a second surface disposed on the opposite side of the first surface, and

wherein said plurality of groove portions are formed at their respective corresponding positions in the first and second surfaces, second groove portions being formed in the second surface and interconnecting radially outward ends of the first-mentioned groove portions.

9. A liquid feeder as set forth in claim 1, wherein said cover portion has a first surface disposed opposite to said sealing member, a second surface disposed on the opposite side of the first surface, and a tapering portion the side of which facing the first surface is convex and the side of which facing the second surface is concave, and wherein said groove portions are formed in the tapering portion.

10. A liquid feeder as set forth in claim 1, wherein said needle has a conical front end.

11. A liquid feeder as set forth in claim 10, wherein said needle has a hollow portion and a peripheral wall, and wherein holes in communication with the hollow portion are formed in the front end or peripheral wall of the needle.

**FIG. 1**

# FIG. 2

# FIG. 3

16

26a  26b

26d

L

t

26  26c

# FIG. 4

16

26a  26b

26d

26

26c

# FIG. 5

# FIG. 6

**FIG. 7**

**FIG. 8**

# FIG. 9

# FIG. 10

# FIG. 11

# FIG. 12

# FIG. 13

# FIG. 14

# FIG. 15

# FIG. 16

# FIG. 17

# FIG. 18

# FIG. 19

# FIG. 20

# FIG. 21

# FIG. 22

# FIG. 23

# FIG. 24

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2017/155136 A1 (DAE WOONG PHARMA [KR]) 14 September 2017 (2017-09-14) * Fig. 3 and its description * | 1-11 | INV. B01L3/00 G01N35/10 A61J1/20 |
| Y | US 2008/274514 A1 (DICKEY KATHLEEN A [US] ET AL) 6 November 2008 (2008-11-06) * paragraph [0084] - paragraph [0086]; figures 2 - 4, 8 * | 1-11 | |
| Y | US 2020/094256 A1 (LENTZ AMMON DAVID [US] ET AL) 26 March 2020 (2020-03-26) * paragraph [0086]; figures 2A, 2B * | 1-11 | |
| Y | US 2009/148941 A1 (FLOREZ PETER [US] ET AL) 11 June 2009 (2009-06-11) * paragraph [0010]; figure 5 * | 1-11 | |
| | | | TECHNICAL FIELDS SEARCHED (IPC) B01L G01N A61J |

The present search report has been drawn up for all claims

| Place of search | Date of completion of the search | Examiner |
|---|---|---|
| The Hague | 11 April 2025 | Ueberfeld, Jörn |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 20 9204

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2025

| Patent document cited in search report | Publication date | Patent family member(s) | Publication date |
|---|---|---|---|
| WO 2017155136 A1 | 14-09-2017 | NONE | |
| US 2008274514 A1 | 06-11-2008 | US 6716396 B1 | 06-04-2004 |
| | | US 2001039058 A1 | 08-11-2001 |
| | | US 2001041336 A1 | 15-11-2001 |
| | | US 2003207463 A1 | 06-11-2003 |
| | | US 2004105786 A1 | 03-06-2004 |
| | | US 2004151634 A1 | 05-08-2004 |
| | | US 2004152205 A1 | 05-08-2004 |
| | | US 2005059161 A1 | 17-03-2005 |
| | | US 2008047371 A1 | 28-02-2008 |
| | | US 2008110846 A1 | 15-05-2008 |
| | | US 2008118988 A1 | 22-05-2008 |
| | | US 2008118989 A1 | 22-05-2008 |
| | | US 2008134808 A1 | 12-06-2008 |
| | | US 2008152545 A1 | 26-06-2008 |
| | | US 2008245163 A1 | 09-10-2008 |
| | | US 2008274514 A1 | 06-11-2008 |
| | | US 2008305010 A1 | 11-12-2008 |
| | | US 2009301230 A1 | 10-12-2009 |
| | | US 2010203547 A1 | 12-08-2010 |
| | | US 2011236888 A1 | 29-09-2011 |
| US 2020094256 A1 | 26-03-2020 | EP 2675722 A2 | 25-12-2013 |
| | | EP 3241782 A1 | 08-11-2017 |
| | | ES 2635418 T3 | 03-10-2017 |
| | | ES 2794602 T3 | 18-11-2020 |
| | | US 2014011292 A1 | 09-01-2014 |
| | | US 2020094256 A1 | 26-03-2020 |
| | | US 2023001417 A1 | 05-01-2023 |
| | | WO 2012112505 A2 | 23-08-2012 |
| US 2009148941 A1 | 11-06-2009 | US 2009148941 A1 | 11-06-2009 |
| | | WO 2009017765 A1 | 05-02-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4945572 B